# EUROPEAN PATENT APPLICATION

(11) **EP 4 741 179 A1**
(43) Date of publication of application: **13.05.2026**
(21) Application number: 24862464.5
(22) Date of filing: 29.07.2024
(51) Int. Cl.: B60C 23/04, H01M 10/42, H01M 10/48

(54) **BATTERY LIFE PREDICTION DEVICE AND BATTERY LIFE PREDICTION METHOD**

(30) Priority: 05.09.2023 JP 2023143868
(71) Applicant: BRIDGESTONE CORPORATION, Chuo-ku Tokyo 104-8340 (JP)
(72) Inventor: GOTO, Takato, Tokyo 104-8340 (JP); KURAMOTO, Toshiki, Tokyo 104-8340 (JP); TAKASAWA, Yuya, Tokyo 104-8340 (JP)
(74) Representative: Marks & Clerk LLP
(86) International application number: PCT/JP2024/027002
(87) International publication number: WO 2025/052808

(57) **Abstract**

A battery life prediction apparatus is for predicting the life of a battery of a detection apparatus that detects information on the state of a tire. The battery life prediction apparatus includes an acquisition interface (131) that acquires input data including tire temperature, tire pressure, a value related to voltage of a battery, and a battery usage time, and a predictor (133) that predicts, as the life of the battery, a value related to the voltage after a predetermined future period using the input data and a prediction model. The prediction model is generated by machine learning using training data that takes the tire temperature, the tire pressure, the value related to the voltage of the battery, and the usage time of the battery in performance data as explanatory variables, and a value related to the voltage of the battery after the predetermined period as an objective variable.

## Description

### TECHNICAL FIELD

The present disclosure relates to a battery life prediction apparatus and a battery life prediction method.

### BACKGROUND

Conventionally, various techniques for predicting battery life have been proposed. For example, PTL 1 discloses a technique for obtaining the remaining life of a storage battery for an electric vehicle. In the technique of PTL 1, regression analysis is performed using a plurality of sets of accumulated travel counts and corresponding voltage values to obtain a regression equation. From the regression equation, the travel count corresponding to the life voltage value at a predetermined discharge amount is obtained, and the current travel count is subtracted to estimate the remaining life travel count.

### CITATION LIST

### Patent Literature

PTL 1: JP H06-163084 A

### SUMMARY

### (Technical Problem)

Here, there is a demand for a technique for predicting the life of a battery used in devices mounted on vehicles other than electric vehicles. For example, sensors and transmission units used in tire pressure monitoring systems (TPMS: Tire Pressure Monitoring System) are often powered by batteries. In order to prevent the data transmission of the TPMS, which is necessary for managing the state of the tire, from stopping, predicting the battery life and replacing it at an appropriate timing is important from the viewpoint of safe driving of the vehicle. The technique of PTL 1 estimates how many times remain until the capacity that can be fully charged becomes the usable line as a storage battery for an electric vehicle, because the capacity that can be fully charged decreases as the storage battery deteriorates due to repeated charging and discharging. That is, the technique of PTL 1 predicts changes in the fully charged capacity due to repeated charging and discharging, and since the prediction target is different, it cannot be applied to battery life prediction (estimation of remaining amount) for TPMS.

In view of such circumstances, an object of the present disclosure is to provide a battery life prediction apparatus and a battery life prediction method capable of highly accurately predicting the battery life of a detection apparatus that detects information on the state of a tire.

### (Solution to Problem)

(1) A battery life prediction apparatus according to one embodiment of the present disclosure is
   a battery life prediction apparatus that predicts the life of a battery of a detection apparatus that detects information on the state of a tire, comprising:
   an acquisition interface configured to acquire input data including a temperature of the tire, a pressure of the tire, a value related to a voltage of the battery, and a usage time of the battery; and
   a predictor configured to predict, as the life of the battery, a value related to the voltage after a predetermined period in the future, using the input data and a prediction model,
   wherein the prediction model is generated by machine learning using training data that takes the temperature of the tire, the pressure of the tire, the value related to the voltage of the battery, and the usage time of the battery in performance data as explanatory variables, and a value related to the voltage of the battery after the predetermined period as an objective variable.
(2) In one embodiment of the present disclosure, in (1),
   the input data is acquired from the detection apparatus by fixed-point observation by a reading apparatus installed at a predetermined location, and
   the acquisition interface is configured to acquire the input data via the reading apparatus.
(3) In one embodiment of the present disclosure, in (1) or (2),
   the value related to the voltage is a voltage value that is segmented and grouped, and at least one group corresponds to a state of the battery when the battery is to be replaced.
(4) In one embodiment of the present disclosure, in (3),
   the usage time of the battery is an elapsed time from when the value related to the voltage first fluctuates.
(5) In one embodiment of the present disclosure, in any one of (1) to (4),
   the performance data is stored in a storage apparatus on a network as viewed from the battery life prediction apparatus.
(6) In one embodiment of the present disclosure, in (5),
   the prediction model and the predicted value related to the voltage are stored in the storage apparatus.
(7) In one embodiment of the present disclosure, in any one of (1) to (6),
   the predicted value related to the voltage is provided to a user via a network.
(8) In one embodiment of the present disclosure, in any one of (1) to (7),
   the training data uses a basic statistical quantity with regard to the temperature of the tire and the pressure of the tire in the performance data as the explanatory variables.
(9) A battery life prediction method according to one embodiment of the present disclosure is
   a battery life prediction method for predicting the life of a battery of a detection apparatus that detects information on the state of a tire, comprising:
   acquiring input data including a temperature of the tire, a pressure of the tire, a value related to a voltage of the battery, and a usage time of the battery; and
   predicting, as the life of the battery, a value related to the voltage after a predetermined period in the future, using the input data and a prediction model,
   wherein the prediction model is generated by machine learning using training data that takes the temperature of the tire, the pressure of the tire, the value related to the voltage of the battery, and the usage time of the battery in performance data as explanatory variables, and a value related to the voltage of the battery after the predetermined period as an objective variable.

### (Advantageous Effect)

According to the present disclosure, it is possible to provide a battery life prediction apparatus and a battery life prediction method capable of highly accurately predicting the battery life of a detection apparatus that detects information on the state of a tire.

### BRIEF DESCRIPTION OF THE DRAWINGS

In the accompanying drawings:
FIG. 1 is a diagram illustrating an example configuration of a battery life prediction system including a battery life prediction apparatus according to one embodiment of the present disclosure;
FIG. 2 is another diagram illustrating an example configuration of a battery life prediction system including a battery life prediction apparatus according to one embodiment of the present disclosure;
FIG. 3 is a flowchart exemplifying the processing of battery life prediction;
FIG. 4 is a flowchart illustrating details of the model generation step in FIG. 3; and
FIG. 5 is a flowchart illustrating details of the battery life prediction step in FIG. 3.

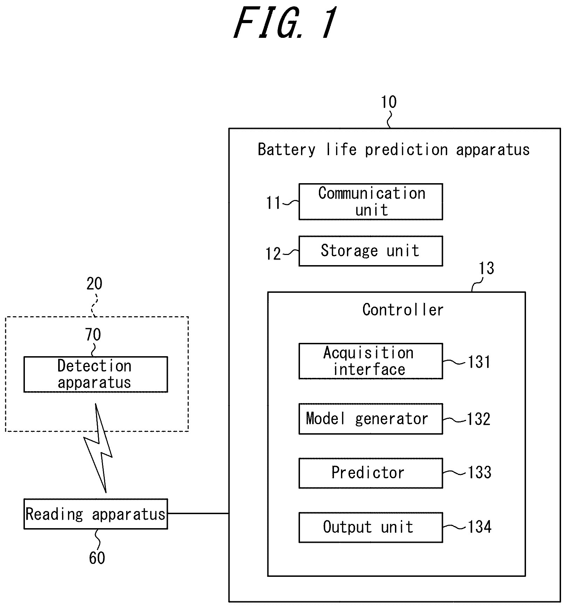

Hereinafter, with reference to the drawings, a battery life prediction apparatus 10 (see FIG. 1) and a battery life prediction method according to an embodiment of the present disclosure will be described. In each drawing, the same or corresponding parts are denoted by the same reference numerals. In the description of the present embodiment, explanations of the same or corresponding parts may be omitted or simplified as appropriate. Here, the "life" of a battery refers, for example, in the case of a primary battery such as a button battery, an alkaline battery, or a manganese battery, to a state in which the voltage has dropped to such an extent that the detection apparatus 70 (see FIG. 1) can no longer perform its normal functions, and replacement is required. The functions of the detection apparatus 70 include, for example, detection functions and communication functions. Further, the "life" of a battery refers, for example, in the case of a secondary battery, to a state in which the voltage has dropped to such an extent that the detection apparatus 70 can no longer perform its normal functions, and charging or replacement is required.

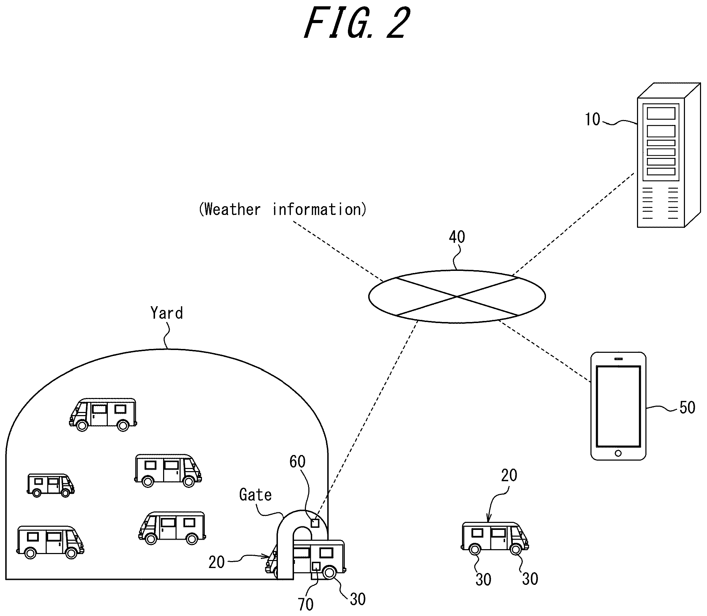

FIG. 1 and FIG. 2 are diagrams illustrating an example configuration of a battery life prediction system including the battery life prediction apparatus 10 according to the present embodiment. FIG. 1 is a block diagram including an example internal configuration of the battery life prediction apparatus 10. FIG. 2 illustrates the overall configuration of the battery life prediction system.

The battery life prediction apparatus 10 predicts the life of a battery of a detection apparatus 70 that detects information on the state of a tire 30 mounted on a vehicle 20. In the present embodiment, the detection apparatus 70 is an in-vehicle device mounted on the vehicle 20 or the tire 30, and specific examples thereof will be described later. The vehicle 20 may be, for example, a passenger car, a truck, a bus, or a construction vehicle, and is not limited to a specific type of mobile body. In the present embodiment, the vehicle 20 is described as a truck that performs work in a yard (Yard in FIG. 2) or carries in or out goods to or from the yard. In the yard, a plurality of vehicles 20 perform work, carry-in, or carry-out operations.

In the present embodiment, the battery life prediction apparatus 10 generates a prediction model and predicts the life of the battery of the detection apparatus 70 using the generated prediction model. That is, the battery life prediction apparatus 10 according to the present embodiment is described as an apparatus having both the function of generating a prediction model (model generation apparatus) and the function of estimating battery life. As another example, the battery life prediction apparatus 10 may be an apparatus having only the function of estimating battery life using a prediction model generated in advance.

As illustrated in FIG. 1, the battery life prediction apparatus 10 includes a communication unit 11, a storage unit 12, and a controller 13. The controller 13 includes an acquisition interface 131, a model generator 132, a predictor 133, and an output unit 134. The battery life prediction apparatus 10 may be, for example, a computer as its hardware configuration. Details of the components of the battery life prediction apparatus 10 will be described later. Here, the battery life prediction apparatus 10 may not be a single device, but may be composed of a plurality of devices arranged at different locations and capable of transmitting and receiving data with each other via a network 40. That is, a plurality of devices connected via the network 40 may function as the battery life prediction apparatus 10 as a whole as illustrated in FIG. 1. Therefore, for example, the battery life prediction apparatus 10 may be configured as a single computer as its hardware configuration, or may be configured as a plurality of computers connected via the network 40. When configured with a plurality of computers, the storage unit 12 may be a shared memory or a storage device on the network 40 accessible by each computer.

The battery life prediction apparatus 10 may constitute a battery life prediction system together with devices other than the battery life prediction apparatus 10 (hereinafter, "external devices") connected via the network 40. The network 40 may be, for example, the Internet. Further, the network 40 may include, for example, a LAN (Local Area Network) in part. The external devices include a reading apparatus 60. The external devices may also include a terminal device 50 used by a user. The user is a person who uses the battery life prediction system and may include, for example, an administrator who manages maintenance of the vehicle 20. The terminal device 50 is, for example, a general-purpose mobile terminal such as a smartphone or tablet terminal, but is not limited thereto. Further, the external devices may further include an information providing apparatus connected via the network 40. The information providing apparatus may provide, for example, weather information for the region in which the vehicle 20 travels. The weather information includes information on the temperature of the region and may be used, for example, to verify or correct the temperature of the tire 30 described later to a more accurate value.

The detection apparatus 70 is a device or in-vehicle system equipped with a sensor that generates information on the state of the tire 30 (hereinafter, "mounted tire information"). In the present embodiment, the detection apparatus 70 includes a tire pressure monitoring system (TPMS) installed inside the tire 30 or on the wheel.

The tire pressure monitoring system monitors the pressure (internal pressure) of the tire 30 mounted on the vehicle 20. The tire pressure monitoring system may include, for example, a sensor installed inside the tire 30, a processor that calculates and outputs the pressure of the tire 30 based on the detection value of the sensor, and a memory that stores the detection value of the sensor and the like. The sensor may include a pressure sensor and a temperature sensor.

In the present embodiment, the tire pressure monitoring system outputs, as mounted tire information, information on the pressure and temperature of the tire 30 to the battery life prediction apparatus 10. Here, the tire pressure monitoring system is driven by a battery. The tire pressure monitoring system may include, in the mounted tire information, not only information on the pressure and temperature of the tire 30, but also the usage time of the battery. For example, when the tire pressure monitoring system has a function of measuring the elapsed time from the first fluctuation of the voltage level described later, this may be included as the battery usage time in the mounted tire information. However, the battery usage time does not necessarily have to be measured by the tire pressure monitoring system. For example, at a gate described later, the elapsed time from the first fluctuation of the voltage level described later may be measured by communication between the tire pressure monitoring system and the reading apparatus 60, and this may be used as the battery usage time. As described later, performance data, which is accumulated past mounted tire information, is used for generating the prediction model. By associating the information on the pressure and temperature of the tire 30 with time information, the time variation of the temperature and pressure of the tire 30 in the performance data can be accurately grasped, enabling the generation of a highly accurate prediction model.

The tire pressure monitoring system may be configured to output the mounted tire information directly to the battery life prediction apparatus 10. However, the tire pressure monitoring system may be driven by a small battery (a battery with a small capacity), such as a button battery. In the present embodiment, in order to extend the life of the battery, the tire pressure monitoring system outputs the mounted tire information to the battery life prediction apparatus 10 via the reading apparatus 60. The tire pressure monitoring system temporarily stores the mounted tire information in memory, and when it becomes possible to communicate with the reading apparatus 60, transmits the stored mounted tire information to the reading apparatus 60.

Further, in the present embodiment, the tire pressure monitoring system measures the voltage of the battery and outputs, as mounted tire information, a "value related to the voltage" of the battery to the battery life prediction apparatus 10. The value related to the voltage is a voltage value that is segmented and grouped, and at least one group corresponds to a state of the battery when it should be replaced. For example, when the voltage at the start of use (i.e., the voltage of a new battery) is 3.1 V, if the measured voltage of the battery is 3.1 V or higher, the value related to the voltage is "3" (level 3). If the measured voltage of the battery is 2.7 V or higher and less than 3.1 V, the value related to the voltage is "2" (level 2). If the measured voltage of the battery is 2.4 V or higher and less than 2.7 V, the value related to the voltage is "1" (level 1). If the measured voltage of the battery is less than 2.0 V, the value related to the voltage is "0" (level 0). Among these, level 1 corresponds to the state of the battery when it should be replaced. For example, if it is predicted that the value related to the voltage after a predetermined period (for example, three months) will be level 1, the user can avoid the operation of the detection apparatus 70 being stopped by replacing the battery within the predetermined period. In this way, by using a value (level) in which the voltage value itself is grouped, rather than the voltage value itself, efficient battery life prediction becomes possible. In addition, since the tire pressure monitoring system can transmit information on the voltage of the battery with a small amount of data, it is possible to suppress an increase in the amount of transmission data. Here, the above grouping is merely an example and may be divided into more groups. Further, the state of the battery to be replaced may be defined, for example, based on the voltage range of the battery in which the detection apparatus 70 can transmit mounted tire information.

As illustrated in FIG. 2, the reading apparatus 60 is installed, for example, at a gate, which is an entrance or exit of the yard. When the vehicle 20 passes through the gate, the tire pressure monitoring system mounted on the vehicle 20 and the reading apparatus 60 become able to communicate, and the reading apparatus 60 reads the mounted tire information. That is, information transmitted from the tire pressure monitoring system is received only when the vehicle 20 approaches the gate. Communication between the tire pressure monitoring system and the reading apparatus 60 may be, for example, near field communication. The mounted tire information is acquired from the detection apparatus 70 by fixed-point observation by the reading apparatus 60 installed at such a predetermined location. Then, the acquisition interface 131 of the battery life prediction apparatus 10 can acquire the mounted tire information via the reading apparatus 60. In the battery life prediction system, the batteries of the detection apparatuses 70 mounted on vehicles 20 passing through the gate provided in the yard can be set as prediction targets. That is, in the battery life prediction apparatus 10 according to the present embodiment, even for detection apparatuses 70 that do not transmit data directly to the battery life prediction apparatus 10 (detection apparatuses 70 whose transmitted information is not always received), highly accurate battery life prediction is possible by the prediction processing described later.

Hereinafter, details of the components of the battery life prediction apparatus 10 will be described. The communication unit 11 includes one or more communication modules connected to the network 40. The communication unit 11 may include, for example, a communication module compatible with mobile communication standards such as 4G (4^{th} Generation) or 5G (5^{th} Generation). The communication unit 11 may include, for example, a communication module compatible with wired or wireless LAN standards.

The storage unit 12 is one or more memories. The memory may be, for example, a semiconductor memory, a magnetic memory, or an optical memory, but is not limited thereto and may be any memory. The storage unit 12 is, for example, built into the battery life prediction apparatus 10, but may be configured to be accessed externally by the battery life prediction apparatus 10 via any interface.

The storage unit 12 stores various data used in various calculations executed by the controller 13. The storage unit 12 may also store results and intermediate data of various calculations executed by the controller 13. In the present embodiment, the storage unit 12 stores the generated prediction model. Further, in the present embodiment, the storage unit 12 stores performance data. The performance data includes past mounted tire information acquired via the reading apparatus 60 and accumulated in the storage unit 12. The performance data includes past information on the pressure of the tire 30, information on the temperature of the tire 30, the value related to the voltage of the battery, and the usage time of the battery. In other words, time-series information on the pressure, temperature, and value related to the voltage of the tire 30 associated with the usage time of the battery is stored as performance data in the storage unit 12.

The controller 13 includes one or more processors. The processor may be, for example, a general-purpose processor or a dedicated processor specialized for specific processing, but is not limited thereto and may be any processor. The controller 13 controls the overall operation of the battery life prediction apparatus 10.

Here, the battery life prediction apparatus 10 may have the following software configuration. One or more programs used to control the operation of the battery life prediction apparatus 10 are stored in the storage unit 12. When the program stored in the storage unit 12 is read by the processor of the controller 13, the controller 13 functions as the acquisition interface 131, the model generator 132, the predictor 133, and the output unit 134.

The acquisition interface 131 acquires performance data for generating training data when generating a prediction model. The training data may be generated by extracting an objective variable (for example, a value related to the voltage of the battery after a predetermined period) and explanatory variables (for example, the temperature and pressure of the tire 30) from the performance data. The acquisition interface 131 also acquires the prediction model stored in the storage unit 12 when predicting battery life using the prediction model. The acquisition interface 131 also acquires input data. The input data includes, for example, mounted tire information detected by the detection apparatus 70 driven by the battery to be predicted. That is, the input data includes information on the temperature of the tire 30, the pressure of the tire 30, the value related to the voltage of the battery, and the usage time of the battery, which are used for battery life prediction.

The model generator 132 generates a prediction model based on the performance data acquired by the acquisition interface 131. The model generator 132 generates training data using the temperature of the tire 30, the pressure of the tire 30, the value related to the voltage of the battery, and the usage time of the battery in the performance data as explanatory variables, and the value related to the voltage of the battery after a predetermined period as the objective variable. The predetermined period is three months in the present embodiment, but may be, for example, six months or one year, and is not limited to a specific value. Further, the temperature and pressure of the tire 30 used as explanatory variables may be those calculated as basic statistical quantities described later. The model generator 132 generates a prediction model by machine learning using the training data. The machine learning method is not limited, but may be, for example, random forest. The number of sets of training data is not limited, but may be 20,000 or more as an example.

In the present embodiment, the model generator 132 generates a prediction model without distinguishing the type or region of the vehicle 20. As another example, the model generator 132 may generate a prediction model for each type of vehicle 20 or for each region. By selecting from among a plurality of prediction models one that matches the type or region of the vehicle 20 and executing battery life prediction, it becomes possible to make predictions according to the circumstances of the type or region of the vehicle 20. For example, in general, there is a difference in the tendency of battery consumption between cold and warm regions, and predictions that take such circumstances into account become possible. When prediction models for each type or region of vehicle 20 are generated, the training data may also use, for example, axle position, vehicle ID, fleet ID, and country information as explanatory variables. The axle position is the position of the axle in the vehicle 20 and differs depending on the type of vehicle 20. The vehicle ID is an identifier for identifying each vehicle 20. The fleet ID is an identifier given to a group of vehicles 20, such as a plurality of vehicles 20 working in a yard, and differs depending on the region (work location). The country information is, for example, an identifier for the country and corresponds to large-area regional information. This information may be added by at least one of the detection apparatus 70 and the reading apparatus 60 and accumulated as performance data.

The predictor 133 predicts, as the life of the battery, a value related to the voltage after a predetermined period in the future, using the input data acquired by the acquisition interface 131 and the prediction model stored in the storage unit 12. As described above, the prediction model is generated by machine learning using training data based on time-series information on the pressure and temperature of the tire 30 associated with the usage time of the battery. Especially in a gate-type TPMS, only intermittent, discontinuous data on the pressure and temperature of the tire 30 may be obtained by fixed-point observation, but by performing machine learning using accumulated performance data, a prediction model with high prediction accuracy can be generated. Therefore, it is possible to accurately predict the life of the battery of the detection apparatus 70 that detects information on the state of the tire 30.

The output unit 134 outputs the result predicted by the predictor 133 to a display device or the like. For example, a display included in the terminal device 50 can function as a display device for presenting the prediction result. The prediction result includes a value related to the predicted voltage (for example, the voltage level after a predetermined period), and is provided to the user via the network 40. The user can obtain prediction information regarding the battery life of the detection apparatus 70 regardless of their location. For example, the user can plan battery replacement operations for the detection apparatus 70 based on the prediction result. For example, the predictor 133 may periodically perform predictions for the detection apparatuses 70 of a plurality of vehicles 20 operating in a yard. By periodically presenting the prediction results to the user, the output unit 134 can prevent omissions in battery replacement operations. Further, based on actual measured values, the accuracy of the prediction results may be periodically verified. For example, if the accuracy rate falls below a preset reference value, the model generator 132 may generate or update the prediction model again using actual performance data added after the prediction model was generated. Here, actual performance data may also be used in verifying the accuracy of the prediction results. For example, the actual performance data may be divided and selectively used as training data (learning data), validation data, test data, and so on.

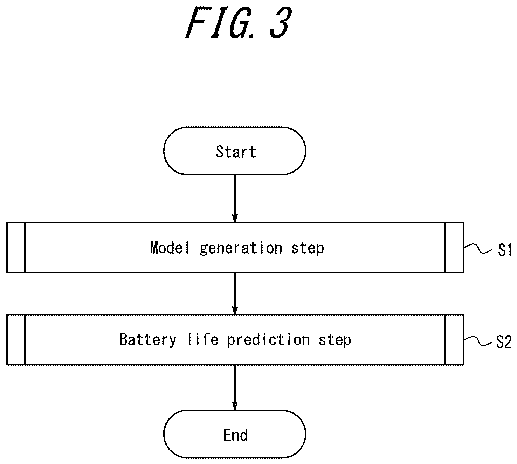

FIG. 3 is a flowchart illustrating an example of the battery life prediction processing executed by the battery life prediction apparatus 10. The acquisition interface 131 and the model generator 132 execute a model generation step (step S1, model generation method) for generating a prediction model for predicting battery life. Further, the acquisition interface 131, the predictor 133, and the output unit 134 execute a battery life prediction step (step S2, battery life prediction method) for predicting the life of the battery, which is the prediction target, using the generated prediction model. The battery life prediction step may be executed continuously with the model generation step, or may be executed after a certain period has elapsed following the model generation step.

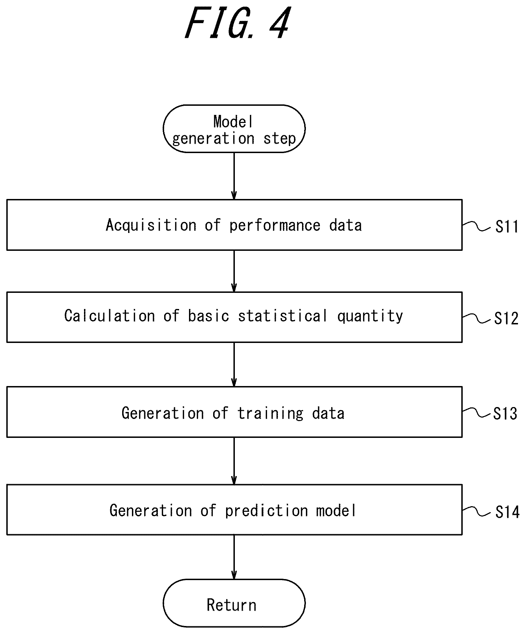

FIG. 4 is a flowchart illustrating the details of the model generation step in FIG. 3. The acquisition interface 131 acquires, for example, actual performance data stored in the storage unit 12 (step S11).

The model generator 132 calculates basic statistical quantities for generating training data based on the actual performance data (step S12). The basic statistical quantity is, for example, an average value. For example, an average value may be calculated for the state of the tire 30 at predetermined time intervals (as one example, every several hours). As another example, the basic statistical quantity may be a variance, maximum value, or minimum value. In this example, the training data uses the basic statistical quantities regarding the temperature of the tire 30 and the pressure of the tire 30 as explanatory variables. By using basic statistical quantities, it is possible to remove noise included in the actual performance data and generate a more accurate prediction model.

The model generator 132 generates training data using the calculated basic statistical quantities (step S13), and generates a prediction model by machine learning using the training data (step S14). The generated prediction model is stored in the storage unit 12.

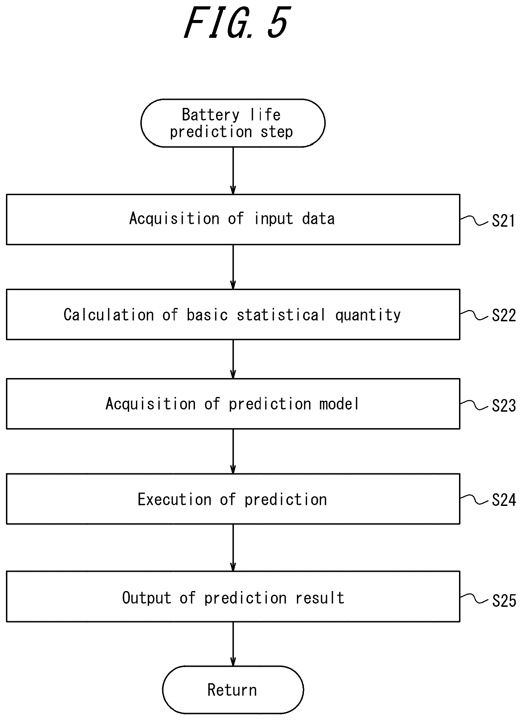

FIG. 5 is a flowchart illustrating the details of the battery life prediction step in FIG. 3. The acquisition interface 131 acquires input data (step S21), calculates basic statistical quantities (step S22), and acquires the prediction model from the storage unit 12 (step S23).

The predictor 133 predicts, as the life of the battery, a value related to the voltage after a predetermined period in the future using the input data and the prediction model (step S24). The output unit 134 outputs the result predicted by the predictor 133 (step S25). The output prediction result may be presented, for example, on a display of the terminal device 50 so that an administrator who manages maintenance of the vehicle 20 can confirm it. For example, if the prediction result predicts that the batteries of the detection apparatuses 70 mounted on ten vehicles 20 will reach level 1 (a state in which the battery should be replaced) in three months, the administrator may schedule battery replacement for those ten vehicles 20 within three months.

As described above, the battery life prediction apparatus 10 and the battery life prediction method according to the present embodiment can accurately predict the battery life of the detection apparatus 70 that detects information regarding the state of the tire 30, by means of the above configuration and steps.

The embodiments of the present disclosure have been described based on the accompanying drawings and examples, but it should be noted that various modifications or alterations can be easily made based on the present disclosure by those skilled in the art. Therefore, it should be understood that such modifications or alterations are included within the scope of the present disclosure. For example, the functions included in each component or each step can be rearranged as long as there is no logical inconsistency, and a plurality of components or steps can be combined into one or divided. The embodiments according to the present disclosure can also be realized as a program executed by a processor included in the apparatus, and as a storage medium recording the program. It should be understood that these are also included within the scope of the present disclosure.

For example, the configurations of the battery life prediction apparatus 10 and the battery life prediction system illustrated in FIG. 1 and FIG. 2 are merely examples and are not limited to the configurations of FIG. 1 and FIG. 2. For example, the battery life prediction system may have a configuration in which the battery life prediction apparatus 10 and the reading apparatus 60 are integrated. Further, in FIG. 2, it is not necessary for weather information to be provided from the information providing apparatus. Also, the storage unit 12 may be a storage device on the network 40 as viewed from the battery life prediction apparatus 10, rather than a storage device included in the battery life prediction apparatus 10. For example, the actual performance data may be stored in a storage device on the network 40. Further, the prediction model and the value related to the predicted voltage (prediction result) may be stored in a storage device on the network 40. With such a configuration, the battery life prediction apparatus 10 is not limited to a device equipped with a large storage device (such as a server computer), and can be configured, for example, as a small computer (such as a tablet terminal).

Further, the model generator 132 and the predictor 133 may be included in different computers. For example, the model generator 132 may be included in another computer (an independent model generation apparatus) that is capable of communicating with the battery life prediction apparatus 10 and can also access the storage unit 12. In this case, the battery life prediction apparatus 10 may predict battery life using a prediction model generated by another computer and stored in the storage unit 12. The prediction model may be generated as described above. That is, another computer may acquire actual performance data and generate a prediction model using training data based on the actual performance data.

### REFERENCE SIGNS LIST

- 10: Battery life prediction apparatus
- 11: Communication unit
- 12: Storage unit
- 13: Controller
- 20: Vehicle
- 30: Tire
- 40: Network
- 50: Terminal device
- 60: Reading apparatus
- 70: Detection apparatus
- 131: Acquisition interface
- 132: Model generator
- 133: Predictor
- 134: Output unit

## Claims

1. A battery life prediction apparatus for predicting a life of a battery of a detection apparatus that detects information on a state of a tire, the battery life prediction apparatus comprising:
an acquisition interface configured to acquire input data including a temperature of the tire, a pressure of the tire, a value related to a voltage of the battery, and a usage time of the battery; and
a predictor configured to predict, as the life of the battery, a value related to the voltage after a predetermined period in the future, using the input data and a prediction model,
wherein the prediction model is generated by machine learning using training data that takes the temperature of the tire, the pressure of the tire, the value related to the voltage of the battery, and the usage time of the battery in performance data as explanatory variables, and a value related to the voltage of the battery after the predetermined period as an objective variable.

2. The battery life prediction apparatus according to claim 1, wherein
the input data is acquired from the detection apparatus by fixed-point observation by a reading apparatus installed at a predetermined location, and
the acquisition interface is configured to acquire the input data via the reading apparatus.

3. The battery life prediction apparatus according to claim 1 or 2, wherein the value related to the voltage is a voltage value that is segmented and grouped, and at least one group corresponds to a state of the battery when the battery is to be replaced.

4. The battery life prediction apparatus according to claim 3, wherein the usage time of the battery is an elapsed time from when the value related to the voltage first fluctuates.

5. The battery life prediction apparatus according to any one of claims 1 to 4, wherein the performance data is stored in a storage apparatus on a network as viewed from the battery life prediction apparatus.

6. The battery life prediction apparatus according to claim 5, wherein the prediction model and the predicted value related to the voltage are stored in the storage apparatus.

7. The battery life prediction apparatus according to any one of claims 1 to 6, wherein the predicted value related to the voltage is provided to a user via a network.

8. The battery life prediction apparatus according to any one of claims 1 to 7, wherein the training data uses a basic statistical quantity with regard to the temperature of the tire and the pressure of the tire in the performance data as the explanatory variables.

9. A battery life prediction method for predicting a life of a battery of a detection apparatus that detects information on a state of a tire, the battery life prediction method comprising:
acquiring input data including a temperature of the tire, a pressure of the tire, a value related to a voltage of the battery, and a usage time of the battery; and
predicting, as the life of the battery, a value related to the voltage after a predetermined period in the future, using the input data and a prediction model,
wherein the prediction model is generated by machine learning using training data that takes the temperature of the tire, the pressure of the tire, the value related to the voltage of the battery, and the usage time of the battery in performance data as explanatory variables, and a value related to the voltage of the battery after the predetermined period as an objective variable.
